# EUROPÄISCHE PATENTSCHRIFT

(11) **EP 0 816 440 B1**
(45) Veröffentlichungstag und Bekanntmachung des Hinweises auf die Patenterteilung: **11.12.2002**
(21) Anmeldenummer: 97810361.2
(22) Anmeldetag: 10.06.1997
(51) Int. Cl.: C09B 67/22, C09C 1/00

(54) **Bismuthvanadat-Pigmentpulvermischungen**
Bismuth-vanadat pigment powder mixtures
Mélanges de pigments bismuth-vanadate en poudre

(30) Priorität: 17.06.1996 CH 150996
(43) Veröffentlichungstag der Anmeldung: 07.01.1998
(73) Patentinhaber: Ciba Specialty Chemicals Holding Inc., 4057 Basel (CH)
(72) Erfinder: Erkens, Leonardus Johannes Hubertus, 6213 CK Maastricht (NL); Schmitt, Gregor, 6372 NE Landgraaf (NL); Hamers, Hendrikus Maria Anna, 52538 Selfkant (DE); Luijten, Johannes Maria Martinus, 6351 CL Bocholtz (NL); Mains, Jozef Gertruda Emanuel, 6118 BV Nieuwstadt (NL)

(56) Entgegenhaltungen:
- EP-A- 0 212 361
- EP-A- 0 304 399
- WO-A-92/11205
- H. ENDRISS: "bismuth-vanadate pigments in paints" THE BULLETIN OF THE BISMUTH INSTITUTE, Bd. 68, 1995, BRUSSELS, Seite 1-3 XP002041943
- CHEMICAL ABSTRACTS, vol. 112, no. 22, 28.Mai 1990 Columbus, Ohio, US; abstract no. 200653, WUERTH H: "Yellow, orange, red: new possibilities with covering isoindoline pigments" XP002041944 & 19TH FATIPEC-KONGR., Bd. 4, 1988, AACHEN, Seiten 49-65,

## Beschreibung

Die vorliegende Erfindung betrifft Pigmentpulvermischungen bestehend aus Bismuthvanadat-Pigmenten und organischen Pigmenten und deren Verwendung zur Herstellung farbiger Lacke und Kunststoffe von hoher Farbtonreinheit.

Bismuthvanadate sind seit langem bekannt und die Möglichkeit ihrer Verwendung als Pigmente wurde, wie aus G. Buxbaum, Industrial Inorganic Pigments, S. 114, VCH-Verlag (1993) und z.B. den US-Patenten 3 843 554 und 4 115 142 hervorgeht, in den 70er Jahren erkannt. Sie sind insbesondere wegen ihrer geringen Toxizität und der guten coloristischen Eigenschaften sehr geschätzt. Die Zusammensetzung der als C.I. Pigment Yellow 184 bezeichneten handelsüblichen Bismuthvanadat-Pigmente ist sehr unterschiedlich und reicht z.B. vom reinen BiVO₄ bis zum Mischphasenpigment 4 BiVO₄ x 3 Bi₂MoO₄ (vgl. The Bulletin of the Bismuth Institute 68, 1995). Bi und V können dabei auch teilweise durch andere Metalle oder Nichtmetalle ersetzt sein, wie z.B. Li, Mg, Zn, Al und insbesondere Ca, sowie W und insbesondere P und Mo.

Aus dem oben erwähnten Artikel im Bulletin of the Bismuth Institute geht hervor, dass die Kombination von Bismuth vanadat-Pigment mit organischen Pigmenten (Perylene, Phthalocyanine, u.s.w.) eine gute Basis für Pigmente mit hoher Sättigung darstellt. Dies hatte auch H. Würth am XIX FATIPEC-Kongress 1988 (Aachen) aufgrund von Versuchen in Lack systemen mit Gemischen von C.I. Pigment Yellow 184 und C.I. Pigment Yellow 139 postuliert.

Es muss allerdings festgehalten werden, dass üblicherweise in der Lackindustrie solche Kombinationen durch Vermischen von Lacken bewerkstelligt wird, d.h. das Bismuth vanadat-Pigment und das organische Pigment werden je in einem Lack eingearbeltet und dann die beiden Lacke im gewünschten Verhältnis miteinander vermischt.

Es ist nun gefunden worden, dass beim Vermischen des Bismuthvanadat-Pigments mit dem organischen Pigment in Pulverform und Einarbeiten der Pulvermischung im Lack oder auch in Kunststoffen überraschenderweise eine noch deutlichere Verbesserung der Farbtonreinheit (Sättigung oder Chroma) erzielt wird. Pigmentpulvermischungen dieser Art sind neu.

Die vorliegende Erfindung betrifft demnach ein Pigmentpulvergemisch bestehend aus
- 0,999-0,5 Teilen C.I. Pigment Yellow 184 und
- 0,001-0,5 Teilen eines organischen Pigments ausgewählt aus der Gruppe bestehend aus C.I. Pigment Orange 13, C.I. Pigment Orange 34, C.I. Pigment Orange 36, C.I. Pigment Orange 73, C.I. Pigment Rot 170, C.I. Pigment Rot 254, C.I. Pigment Rot 255 und C.I. Pigment Rot 264
oder aus
- 0,99-0,5 Teilen C.I. Pigment Yellow 184 und
- 0,01-0,5 Teilen eines organischen Pigments ausgewählt aus der Gruppe bestehend aus C.I. Pigment Yellow 83, C.I. Pigment Yellow 110 und C.I. Pigment Yellow 139,
wobei ein Pigmentpulvergemisch, bestehend aus C.I. Pigment Yellow 184 und C.I. Pigment Yellow 83 im Gewichtsverhältnis 97:3 ausgenommen ist.

Von besonderem Interesse sind Pigmentpulvergemische enthaltend als organisches Pigment ein Pigment ausgewählt aus C.I. Pigment Orange 13, C.I. Pigment Orange 34, C.I. Pigment Orange 36, C.I. Pigment Orange 73, C.I. Pigment Rot 170, C.I. Pigment Rot 254, C.I. Pigment Rot 255 und C.I. Pigment Rot 264 und C.I. Pigment Yellow 83.

Bevorzugt sind Pigmentpulvergemische bestehend aus
- 0,85-0,75 Teilen C.I. Pigment Yellow 184 und
- 0,15-0,25 Teilen eines organischen Pigments ausgewählt aus der Gruppe bestehend aus C.I. Pigment Orange 73, C.I. Pigment Rot 254 und C.I. Pigment Rot 264.

Bevorzugtes organisches Pigment ist C.I. Pigment Orange 73.

Die erfindungsgemässen Pigmentpulvermischungen werden durch Vermischen beider Pigmente in Pulverform nach üblichen Methoden hergestellt.

Wie bereits erwähnt erlauben die erfindungsgemässen Pigmentpulvermischungen die Herstellung farbiger hochmolekularer organischer Materialien mit besonders hoher Farbtonreinheit.

Ein weiterer Gegenstand der vorliegenden Anmeldung ist demnach ein Verfahren zur Herstellung farbiger hochmolekularer organischer Materialien durch Einarbeiten eines Pigmentpulvergemisches der oben angegebenen Zusammensetzung nach allgemein bekannten Methoden.

Hochmolekulare organische Materialien, die mit den erfindungsgemässen Bismuth vanadat-Pigmentpulvergemischen pigmentiert werden können, sind z.B. Cellulose ether und -ester, wie Ethylcellulose, Nitrocellulose, Ceiluloseacetat und Cellulosebutyrat, natürliche Harze und Kunstharze, wie Polymerisationsharze oder Kondensationsharze, z.B. Aminoplaste, insbesondere Harnstoff- und Melamin-Formaldehyd harze, Alkydharze, Phenoplaste, Polycarbonate, Polyolefine, wie Polyethylen und Polypropylen, Polystyrol, Polyvinylchlorid, Polyacrylnitril, Polyacrylsäureester, Polyamide, Polyurethane, Polyester, Gummi, Casein, Silikon und Silikonharze, einzeln oder in Mischungen.

Dabei spielt es keine Rolle, ob die erwähnten hochmolekularen organischen Verbindungen als plastische Massen, Schmelzen oder in Form von Spinnlösungen, Lacken, Anstrichstoffen oder Druckfarben vorliegen. Je nach Verwendungs zweck erweist es sich als vorteilhaft, die erfindungsgemässen Bismuth vanadat-Pigmentpulvergemische als Toner oder in Form von Präparaten einzusetzen. Bezogen auf das zu pigmentierende hochmolekulare organische Material kann man die erfindungs gemässen Bismuthvanadat-Pigmentpulvergemische in einer Menge von 0,01 bis 75 Gew.-%, vorzugsweise 0,1 bis 50 Gew.-%, einsetzen.

Die erfindungsgemässen Pigmentpulvergemische eignen sich besonders gut zum Pigmentieren von Kunststoffen, z.B. Polyolefinen, wie Polyethylen und Polypropylen, oder Polyvinylchlorid, Fluorpolymerisate, wie z.B. Polyfluorethylen, Polytrifluorchlorethylen oder Tetrafluorethylen/Hexafluorpropylen-Mischpolymerisat, Silikonharze oder auch von Ingenieurwerkstoffen (Engineering Plastics), wie z.B. Polycarbonate, Polyacrylate, Polymethacrylate, Polystyrol, ABS, Polyester, insbesondere Polyalkylenterephthalate, wie Polybutylenterephthalat (PBT) oder Polyethylenterephthalat (PET), Polyamide, Polyetherketone, Polyurethane, einzeln oder in Mischungen.

Die Färbung erfolgt nach den üblichen Verfahren, beispielsweise durch Mischen des Pigmentpulvergemisches mit dem Kunststoffgranulat oder -pulver und Extrudieren der Mischung zu Fasern, Folien oder Granulaten. Letztere können dann beispielsweise im Spritzgussverfahren zu Gegenständen verformt werden.

Die erfindungsgemässen Pigmentpulvergemische werden jedoch vorzugsweise zur Färbung von Lacken verwendet. Dabei handelt es sich bevorzugt um Lacke auf Basis von Acryl-, Alkyd-, Epoxy-, Phenol-, Melamin-, Harnstoff-, Polyester-, Polyurethan-, Isocyanat-, Benzoguanamin- oder Celluloseester-Harzen. Ganz besonders bevorzugt sind Lacke auf Basis von Acryl/Melamin-, Alkyd/Melamin- oder thermoplastischen Acrylharzen sowie wässrige Lacksysteme.

Zum Pigmentieren von Lacken werden die hochmolekularen organischen Materialien und die erfindungsgemässen Pigmentpulvergemische, gegebenenfalls mit Zusatzstoffen, wie Füllmitteln, anderen Pigmenten, Siccativen oder Weichmachern, in einem gemeinsamen organischen Lösungsmittel oder Lösungsmittelgemisch fein dispergiert bzw. gelöst.

Die erhaltenen Färbungen, sowohl in Lacken als auch in Kunststoffen, zeichnen sich durch gute allgemeine Eigenschaften, wie z.B. Migrations-, Hitze-, Licht-, Wetter-, Ueberlackierbeständigkeit, hohe Farbstärke und Insbesondere durch die überraschend hohe Farbtonreinheit aus.

Die nachfolgenden Beispiele dienen zur Erläuterung der Erfindung.

### Beispiel 1:

a) 90,91 g C.I. Pigment Yellow 184 (®IRGACOLOR Yellow 14247, Ciba) werden mit 9,09 g C.I. Pigment Orange 73 vermischt und über eine Labormühle vom Typ Coulatti Nr. 1 mit Siebeinsatz (⌀ = 1,0 mm) vermahlen. Das erhaltene Pigmentgemisch wird in einem AM-Lack nach folgender Vorgehensweise appliziert:
b) 37,0 g eines Alkydmelamin-Lackes der folgenden Zusammensetzung:

| | |
|---|---|
| 18,7 g | eines kurzkettigen Alkydharzes (®SETAL 84xx70 (70 %) der Firma Synthese) |
| 7,2 g | eines Melaminharzes (®SETAMIN US 132 BB70 (70 %) der Firma Synthese) |
| 7,8 g | Solvesso 100 (aromatische Kohlenwasserstoffe) |
| 1,7 g | Butanol |
| 0,8 g | Depanol J (Terpen-Kohlenwasserstoff) |
| 0,8 g | Isophoron, |

werden zusammen mit 10,3 g des Pigmentgemisches von Beispiel 1a) und 40 g Glaskugeln (Durchmesser 3 mm) in einem 100 ml Glasgefäss mit Schraubdeckelverschluss gegeben und auf einer Scandex-Apparatur dispergiert bis eine Feinheit von <10 µm (Hegman-Gauge) erreicht ist.

Der Lack wird auf einem Kontrastkarton ausgezogen (Nassfilmdicke 75 µm), 20 Minuten abgelüftet und während 30 Minuten bei 130°C eingebrannt.

Man erhält Lackierungen mit ausgezeichneter Farbtonreinheit.

### Beispiel 2:

a) 80,0 g C.I. Pigment Yellow 184 (®IRGACOLOR Yellow 14247, Ciba) werden mit 20,0 g C.I. Pigment Orange 73 vermischt und über eine Labormühle vom Typ Coulatti Nr. 1 mit Siebeinsatz (⌀ = 1,0 mm) vermahlen. Das erhaltene Pigmentgemisch wird in einem AM-Lack nach folgender Vorgehensweise appliziert:
b) 37,0 g eines Alkydmelamin-Lackes der folgenden Zusammensetzung:

| | |
|---|---|
| 18,7 g | eines kurzkettigen Alkydharzes (®SETAL 84xx70 (70 %) der Firma Synthese) |
| 7,2 g | eines Melaminharzes (®SETAMIN US 132 BB70 (70 %) der Firma Synthese) |
| 7,8 g | Solvesso 100 |
| 1,7 g | Butanol |
| 0,8 g | Depanol J |
| 0,8 g | Isophoron, |

werden zusammen mit 9,6 g des Pigmentgemisches von Beispiel 2a) und 40 g Glaskugeln (Durchmesser 3 mm) in einem 100 ml Glasgefäss mit Schraubdeckelverschluss gegeben und auf einer Scandex-Apparatur dispergiert bis eine Feinheit von <10 µm (Hegman-Gauge) erreicht ist.

Der Lack wird auf einem Kontrastkarton ausgezogen (Nassfilmdicke 75 µm), 20 Minuten abgelüftet und während 30 Minuten bei 130°C eingebrannt.

Man erhält Lackierungen mit ausgezeichneter Farbtonreinheit.

### Beispiel 3:

a) 99,21 g C.I. Pigment Yellow 184 (®IRGACOLOR Yellow 14247, Ciba) werden mit 0,79 g C.I. Pigment Rot 255 (®IRGAZIN DPP Scarlet EK, Ciba) vermischt und über eine Labormühle vom Typ Coulatti Nr. 1 mit Siebeinsatz (⌀ = 1,0 mm) vermahlen. Das erhaltene Pigmentgemisch wird in einem AM-Lack nach folgender Vorgehensweise appliziert:
b) 37,0 g eines Alkydmelamin-Lackes der folgenden Zusammensetzung:

| | |
|---|---|
| 18,7 g | eines kurzkettigen Alkydharzes (®SETAL 84xx70 (70 %) der Firma Synthese) |
| 7,2 g | eines Melaminharzes (®SETAMIN US 132 BB70 (70 %) der Firma Synthese) |
| 7,8 g | Solvesso 100 |
| 1,7 g | Butanol |
| 0,8 g | Depanol J |
| 0,8 g | Isophoron, |

werden zusammen mit 10,9 g des Pigmentgemisches von Beispiel 3a) und 40 g Glaskugeln (Durchmesser 3 mm) in einem 100 ml Glasgefäss mit Schraubdeckelverschluss gegeben und auf einer Scandex-Apparatur dispergiert bis eine Feinheit von <10 µm (Hegman-Gauge) erreicht ist.

Der Lack wird auf einem Kontrastkarton ausgezogen (Nassfilmdicke 75 µm), 20 Minuten abgelüftet und während 30 Minuten bei 130°C eingebrannt.

Man erhält Lackierungen mit ausgezeichneter Farbtonreinheit.

### Beispiel 4:

a) 94,53 g C.I. Pigment Yellow 184 (®IRGACOLOR Yellow 14247, Ciba) werden mit 5,47 g C.I. Pigment Rot 255 (®IRGAZIN DPP Scarlet EK, Ciba) vermischt und über eine Labormühle vom Typ Coulatti Nr. 1 mit Siebeinsatz (⌀ = 1,0 mm) vermahlen. Das erhaltene Pigmentgemisch wird in einem AM-Lack nach folgender Vorgehensweise appliziert:
b) 37,0 g eines Alkydmelamin-Lackes der folgenden Zusammensetzung:

| | |
|---|---|
| 18,7 g | eines kurzkettigen Alkydharzes (®SETAL 84xx70 (70 %) der Firma Synthese) |
| 7,2 g | eines Melaminharzes (®SETAMIN US 132 BB70 (70 %) der Firma Synthese) |
| 7,8 g | Solvesso 100 |
| 1,7 g | Butanol |
| 0,8 g | Depanol J |
| 0,8 g | Isophoron, |

werden zusammen mit 10,6 g des Pigmentgemisches von Beispiel 4a) und 40 g Glaskugeln (Durchmesser 3 mm) iri einem 100 ml Glasgefäss mit Schraubdeckelverschluss gegeben und auf einer Scandex-Apparatur dispergiert bis eine Feinheit von <10 µm (Hegman-Gauge) erreicht ist.

Der Lack wird auf einem Kontrastkarton ausgezogen (Nassfilmdicke 75 µm), 20 Minuten abgelüftet und während 30 Minuten bei 130°C eingebrannt.

Man erhält Lackierungen mit ausgezeichneter Farbtonreinheit.

### Beispiel 5:

a) 96,23 g C.I. Pigment Yellow 184 (®IRGACOLOR Yellow 14247, Ciba) werden mit 3,77 g C.I. Pigment Yellow 110 (®IRGAZIN Yellow 2RLT, Ciba) vermischt und über eine Labormühle vom Typ Coulatti Nr. 1 mit Siebeinsatz (⌀ = 1,0 mm) vermahlen. Das erhaltene Pigmentgemisch wird in einem AM-Lack nach folgender Vorgehensweise appliziert:
b) 37,0 g eines Alkydmelamin-Lackes der folgenden Zusammensetzung:

| | |
|---|---|
| 18,7 g | eines kurzkettigen Alkydharzes (®SETAL 84xx70 (70 %) der Firma Synthese) |
| 7,2 g | eines Melaminharzes (@SETAMIN US 132 BB70 (70 %) der Firma Synthese) |
| 7,8 g | Solvesso 100 |
| 1,7 g | Butanol |
| 0,8 g | Depanol J |
| 0,8 g | Isophoron, |

werden zusammen mit 10,7 g des Pigmentgemisches von Beispiel 5a) und 40 g Glaskugeln (Durchmesser 3 mm) in einem 100 ml Glasgefäss mit Schraubdeckelverschluss gegeben und auf einer Scandex-Apparatur dispergiert bis eine Feinheit von <10 µm (Hegman-Gauge) erreicht ist.

Der Lack wird auf einem Kontrastkarton ausgezogen (Nassfilmdicke 75 µm), 20 Minuten abgelüftet und während 30 Minuten bei 130°C eingebrannt.

Man erhält Lackierungen mit ausgezeichneter Farbtonreinheit.

### Beispiel 6:

a) 90,0 g C.l. Pigment Yellow 184 (®IRGACOLOR Yellow 14247, Ciba) werden mit 10,0 g C.I. Pigment Yellow 110 (®IRGAZIN Yellow 2RLT, Ciba) vermischt und über eine Labormühle vom Typ Coulatti Nr. 1 mit Siebeinsatz (⌀ = 1,0 mm) vermahlen. Das erhaltene Pigmentgemisch wird in einem AM-Lack nach folgender Vorgehensweise appliziert:
b) 37,0 g eines Alkydmelamin-Lackes der folgenden Zusammensetzung:

| | |
|---|---|
| 18,7 g | eines kurzkettigen Alkydharzes (®SETAL 84xx70 (70 %) der Firma Synthese) |
| 7,2 g | eines Melaminharzes (®SETAMIN US 132 BB70 (70 %) der Firma Synthese) |
| 7,8 g | Solvesso 100 |
| 1,7 g | Butanol |
| 0,8 g | Depanol J |
| 0,8 g | Isophoron, |

werden zusammen mit 10,3 g des Pigmentgemisches von Beispiel 6a) und 40 g Glaskugeln (Durchmesser 3 mm) in einem 100 ml Glasgefäss mit Schraubdeckelverschluss gegeben und auf einer Scandex-Apparatur dispergiert bis eine Feinheit von <10 µm (Hegman-Gauge) erreicht ist.

Der Lack wird auf einem Kontrastkarton ausgezogen (Nassfilmdicke 75 µm), 20 Minuten abgelüftet und während 30 Minuten bei 130°C eingebrannt.

Man erhält Lackierungen mit ausgezeichneter Farbtonreinheit.

## Patentansprüche

1. Pigmentpulvergemisch bestehend aus
- 0,999-0,5 Teilen C.I. Pigment Yellow 184 und
- 0,001-0,5 Teilen eines organischen Pigments ausgewählt aus der Gruppe bestehend aus C.I. Pigment Orange 13, C.I. Pigment Orange 34, C.I. Pigment Orange 36, C.I. Pigment Orange 73, C.I. Pigment Rot 170, C.I. Pigment Rot 254, C.I. Pigment Rot 255 und C.I. Pigment Rot 264
oder aus
- 0,99-0,5 Teilen C.I. Pigment Yellow 184 und
- 0,01-0,5 Teilen eines organischen Pigments ausgewählt aus der Gruppe bestehend aus C.I. Pigment Yellow 83, C.I. Pigment Yellow 110 und C.I. Pigment Yellow 139, wobei ein Pigmentpulvergemisch. bestehend aus C.I. Pigment Yellow 184 und C.I. Pigment Yellow 83 im Gewichtsverhältnis 97:3 ausgenommen ist.

2. Pigmentpulvergemisch gemäss Anspruch 1, wobei das organische Pigment aus Pigment C.I. Pigment Orange 13. C.I. Pigment Orange 34, C.I. Pigment Orange 36. C.I. Pigment Orange 73, C.I. Pigment Rot 170, C.I. Pigment Rot 254. C.I. Pigment Rot 255, C.I. Pigment Rot 264 und C.I. Pigment Yellow 83 ausgewählt wird.

3. Pigmentpulvergemisch gemäss Anspruch 1 bestehend aus
- 0,85-0,75 Teilen C.I. Pigment Yellow 184 und
- 0,15-0,25 Teilen eines organischen Pigments ausgewählt aus der Gruppe bestehend aus C.I. Pigment Orange 73, C.I. Pigment Rot 254 und C.I. Pigment Rot 264.

4. Pigmentpulvergemisch gemäss Anspruch 3 enthaltend als organisches Pigment C.I. Pigment Orange 73.

5. Verfahren zur Herstellung farbiger hochmolekularer organischer Materialien durch Einarbeiten eines Pigmentpulvergemisches gemäss Anspruch 1 nach allgemein bekannten Methoden.

6. Verfahren gemäss Anspruch 5, **dadurch gekennzeichnet, dass** das hochmolekulare organische Material ein Kunststoff ist.

7. Verfahren gemäss Anspruch 6, **dadurch gekennzeichnet, dass** es sich um einen Kunststoff ausgewählt aus der Gruppe bestehend aus Polyolefinen, Polyvinylchlorid, Fluoropolymerisaten, Silikonharzen oder Polycarbonaten, Polyacrylaten, Polymethacrylaten, Polystyrol, ABS, Polyestern, Polyamiden, Polyetherketonen, Polyurethanen, einzeln oder in Mischungen, handelt.

8. Verfahren gemäss Anspruch 5, **dadurch gekennzeichnet, dass** das hochmolekulare organische Material ein Lack ist.

9. Verfahren gemäss Anspruch 8, **dadurch gekennzeichnet, dass** es sich um einen Lack auf Basis von Acryl-, Alkyd-, Epoxy-, Phenol-, Melamin-, Harnstoff-, Polyester-, Polyurethan-, Isocyanat-, Benzoguanamin- oder Celluloseester-Harzen handelt.

10. Verfahren gemäss Anspruch 9, **dadurch gekennzeichnet, dass** es sich um einen Lack auf Basis von Acryl/Melamin-, Alkyd/Melamin- oder thermoplastischen Acrylharzen oder um ein wässriges Lacksystem handelt.

11. Hochmolekulares organisches Material, enthaltend ein Pigmentpulvergemisch nach einem der Ansprüche 1 bis 4.

12. Verwendung eines Pigmentpulvergemisch nach einem der Ansprüche 1 bis 4 zum Pigmentieren von hochmolekularem organischen Materialien.

## Claims

1. A pigment powder mixture consisting of
0.999-0.5 part of C.I. Pigment Yellow 184 and 0.001-0.5 part of an organic pigment selected from the group consisting of C.I. Pigment Orange 13, C.I. Pigment Orange 34, C.I. Pigment Orange 36, C.I. Pigment Orange 73, C.I. Pigment Red 170, C.I. Pigment Red 254, C.I. Pigment Red 255 and C.I. Pigment Red 264
or of
0.99-0.5 part of C.I. Pigment Yellow 184 and 0.01-0.5 part of an organic pigment selected from the group consisting of C.I. Pigment Yellow 83, C.I. Pigment Yellow 110 and C.I. Pigment Yellow 139, with the exception of a pigment powder mixture consisting of C.I. Pigment Yellow 184 and C.I. Pigment Yellow 83 in a weight ratio of 97:3.

2. A pigment powder mixture according to claim 1, wherein the organic pigment is selected from C.I. Pigment Orange 13, C.I. Pigment Orange 34, C.I. Pigment Orange 36, C.I. Pigment Orange 73, C.I. Pigment Red 170, C.I. Pigment Red 254, C.I. Pigment Red 255, C.I. Pigment Red 264 and C.I. Pigment Yellow 83.

3. A pigment powder mixture according to claim 1, consisting of
0.85-0.75 part of C.I. Pigment Yellow 184 and 0.15-0.25 part of an organic pigment selected from the group consisting of C.I. Pigment Orange 73, C.I. Pigment Red 254 and C.I. Pigment Red 264.

4. A pigment powder mixture according to claim 3, comprising as organic pigment C.I. Pigment Orange 73.

5. A process for the preparation of coloured high molecular weight organic materials by incorporating therein a pigment powder mixture according to claim 1 by conventional methods.

6. A process according to claim 5, wherein the high molecular weight organic material is a plastic material.

7. A process according to claim 6, wherein the plastic material is selected from the group consisting of polyolefins, polyvinyl chloride, fluoropolymers, silicone resins, polycarbonates, polyacrylates, polymethacrylates, polystyrene, ABS, polyesters, polyamides, polyether ketones, and polyurethanes, individually or in mixtures.

8. A process according to claim 5, wherein the high molecular weight organic material is a paint.

9. A process according to claim 8, wherein the paint is based on acrylic resins, alkyd resins, epoxy resins, phenolic resins, melamine resins, urea resins, polyester resins, polyurethane resins, isocyanate resins, benzoguanamine resins or cellulose ester resins.

10. A process according to claim 9, wherein the paint is based on acrylic/melamine resins, alkyd/melamine resins or thermoplastic acrylic resins, or is an aqueous paint system.

11. A high molecular weight organic material comprising a pigment powder mixture according to any of claims 1 to 4.

12. The use of a pigment powder mixture according to any of claims 1 to 4 for pigmenting high molecular weight organic materials.

## Revendications

1. Mélange de pigments en poudre constitué par
- 0,999 à 0,5 partie de C.I. Pigment Yellow 184 et
- 0,001 à 0,5 partie d'un pigment organique pris dans le groupe comprenant C.I. Pigment Orange 13, C.I. Pigment Orange 34, C.I. Pigment Orange 36, C.I. Pigment Orange 73, C.I. Pigment Red 170, C.I. Pigment Red 254, C.I. Pigment Red 255 et C.I. Pigment Red 264
ou par
- 0,99 à 0,5 partie de C.I. Pigment Yellow 184 et
- 0,01 à 0,5 partie d'un pigment organique pris dans le groupe comprenant C.I. Pigment Yellow 83, C.I. Pigment Yellow 110 et C.I. Pigment Yellow 139, à l'exception d'un mélange de pigments en poudre constitué par C.I. Pigment Yellow 184 et C.I. Pigment Yellow 83 dans un rapport pondéral 97:3.

2. Mélange de pigments en poudre selon la revendication 1, où le pigment organique est choisi dans le groupe comprenant C.I. Pigment Orange 13, C.I. Pigment Orange 34, C.I. Pigment Orange 36, C.I. Pigment Orange 73, C.I. Pigment Red 170, C.I. Pigment Red 254, C.I. Pigment Red 255 et C.I. Pigment Red 264 et C.I. Pigment Yellow 83.

3. Mélange de pigments en poudre selon la revendication 1, constitué par
- 0,85 à 0,75 partie de C.I. Pigment Red 184 et
- 0,15 à 0,25 partie d'un pigment organique pris dans le groupe comprenant C.I. Pigment Orange 73, C.I. Pigment Red 254 et C.I. Pigment Red 264.

4. Mélange de pigments en poudre selon la revendications 3 contenant en tant que pigment organique le C.I. Pigment Orange 73.

5. Procédé pour la préparation de matières organiques de haut poids moléculaire colorées par incorporation d'un mélange de pigments pulvérulent selon la revendication 1, au moyen de méthodes généralement connues.

6. Procédé selon la revendication 5, **caractérisé en ce que** la matière organique de haut poids moléculaire est une matière synthétique.

7. Procédé selon la revendication 6, **caractérisé en ce qu'**il s'agit d'une matière synthétique prise dans le groupe comprenant des polyoléfines, le poly(chlorure de vinyle), des polymères fluorés, des résines silicones ou des polycarbonates, des polyacrylates, des polyméthacrylates, le polystyrène, l'ABS, des polyesters, des polyamides, des polyéthercétones, des polyuréthannes, seuls ou en mélange.

8. Procédé selon la revendication 5, **caractérisé en ce que** la matière organique est un vernis.

9. Procédé selon la revendication 8, **caractérisé en ce qu'**il s'agit d'un vernis à base de résines acryliques, alkydes, époxydes, phénoliques, de mélamine, d'urée, polyesters, polyuréthannes, d'isocyanates, de benzoguanamine ou d'esters cellulosiques.

10. Procédé selon la revendication 9, **caractérisé en ce qu'**il s'agit d'un vernis à base de résines acrylique/mélamine, alkyde/mélamine ou de résines acryliques thermoplastiques ou d'un système de vernis aqueux.

11. Matière organique de haut poids moléculaire contenant un mélange de pigments en poudre selon l'une des revendications 1 à 4.

12. Utilisation d'un mélange de pigments en poudre selon l'une des revendications 1 à 4, pour la pigmentation de matières organiques de haut poids moléculaire.
